# EUROPEAN PATENT APPLICATION

(11) **EP 3 632 857 A1**
(43) Date of publication of application: **08.04.2020**
(21) Application number: 19191530.5
(22) Date of filing: 12.04.2012
(51) Int. Cl.: C03B 5/02, C03B 5/03, C03C 3/062, C03C 4/00, C03C 13/06

(54) **PROCESSES FOR FORMING MAN MADE VITREOUS FIBRES**

(30) Priority: 13.04.2011 EP 11162328
(62) Divisional of application: 12715371.6
(71) Applicant: Rockwool International A/S, 2640 Hedehusene (DK)
(72) Inventor: SOLVANG, Mette, DK-4000 Roskilde (DK); GROVE-RASMUSSEN, Svend, DK-4000 Roskilde (DK)
(74) Representative: Gill Jennings & Every LLP

(57) **Abstract**

The invention provides a method of manufacture of man made vitreous fibres (MMVF) comprising applying electrical potential to a melt using graphite electrodes; fiberising the melt by means of a spinning cup to form fibres; and collecting the formed fibres, wherein the melt fed to the spinning cup comprises iron oxide.

## Description

This invention relates to processes for the production of man-made vitreous fibres (MMVF).

It is well known to produce man-made vitreous fibres, often described as mineral fibres, by providing a charge of mineral material, melting the charge in a furnace and fiberising the resulting melt to form fibres. The fibres can be used for a variety of purposes, including heat and sound insulation and fire protection.

The final composition of the fibres is generally expressed in oxides of elements contained in fibres and it is well established that the compositions of the charge of the mineral materials, and hence the composition of the melt and final fibres, can influence the use properties of the final fibres.

There are numerous ways of producing a vitreous melt to be fiberised. These include oil- or gas-fired tank furnaces, molybdenum and graphite electrode tank furnaces, electric furnaces including electric arc furnaces and submerged arc furnaces and shaft furnaces such as cupola furnaces.

Melting units, usually used for glass, include oil or gas fired tank furnaces, often combined with electrical heating through the use of molybdenum electrodes to boost the melting process. Heating by means of 100% electrical energy through the use of molybdenum electrodes is also common, for instance as described in US6125658. Glass raw materials, for C-glass types or other types, normally do not have significant content of iron (< 1 wt% measured as Fe₂O₃). Glass melts for MMVF of the normal glass wool types are always processed in oxidising chemical conditions.

When melting raw material with a considerable iron content i.e. when Fe₂O₃ > 2wt%, such as melt compositions for stone wool, then the redox conditions in the melting process influence the process and design of the furnaces.

The melting of such raw materials for stone wool can be made conventionally oxidising such as described in US6125658, but other methods, such as conventional coke-fired cupolas and electric furnaces with graphite electrodes, are known. These will result in reducing melting conditions. For instance, US4969940 discloses the use of an arc furnace having three spaced apart carbon electrodes. This document discloses the use of a shallow vat of molten iron to dissolve coal ash as part of a process for producing mineral wool fibres.

There are numerous known ways of fiberising the resulting melt. These include the continuous drawing process, rotary processes such as those using a cascade spinner or a spinning cup, the flame attenuation process, and the fibre blowing process.

US6698245 is an example of a publication which mentions some of these fiberisation methods. It mentions two centrifugal fibre-forming processes, of which one is the spinning cup process in which fibres are thrown outwardly through perforations in a spinning cup. This publication also mentions another centrifugal fibre-forming process in which melt is thrown off a rotating disc and fibre formation is promoted by blasting jets of gas through the melt. However, the preferred method of fibre formation is with the use of a cascade spinner. This publication describes an invention in which the mineral melt is formed from mineral solids of which 80 to 98% are low halogen mineral materials (containing below 0.5% by weight halogen) and 2 to 20% by weight are high halogen mineral waste (containing at least 1% by weight halogen). The melt may be generated in a variety of ways, including melting all raw materials together in one furnace; melting the high halogen mineral waste and the low halogen mineral material in separate furnaces; and feeding high halogen mineral waste into a preformed melt in a furnace. A variety of furnaces are mentioned including shaft furnaces, preferably a cupola furnace, tank furnaces, including gas or oil-fired tank furnaces, molybdenum and graphite electrode tank furnaces and electric arc furnaces. It is said to be preferred that the high halogen waste is melted in an electric or plasma furnace and that the low halogen mineral material is melted in a cupola or other shaft furnace. In the exemplified processes the mineral materials are melted together in a cupola furnace and the subsequent melt fiberised using a cascade spinner.

WO95/01941 discloses the production of mineral wool from melts containing iron (according to this publication the inclusion of MgO and Fe₂O₃ improves the fire resistance of the produced fibres), by a method including a spinning cup process. The melt can be formed using a conventional tank furnace or, preferably, using a coke-fired cupola furnace. From a commercial point of view, the level of impurities in the melt from a conventional coke-fired cupola would be a severe disadvantage in practice. The cupola method will generate in the melt a proportion of Fe(2+), based on the total Fe, of about 80% or higher. However it will also generate impurities of metallic iron, Fe(0), which will cause blockage of the holes in the spinning cup and shorten the usable lifetime of the spinning cup. This significantly increases maintenance costs and leads to problems in relation to commercial utilisation of the method.

It is known from GB2220654 to use high centrifugal speed in a centrifugal rotary process to create sufficient force to force molten glass through small holes to create fibres. The melt contains iron in an amount of about 4 to about 12 wt % (total of FeO and Fe₂O₃). The melt is produced in a conventional gas fired oxidising furnace or conventional electric glass furnace which also has oxidising conditions. These oxidising melting conditions lead to a distribution of iron oxides in the fibres, wherein the ratio Fe(2+)/Fe(total) is in the range 30 - 40%. The fibres produced tend to have rather poor temperature resistance.

WO01/81258 describes production of insulation material by a method which involves melting basalt-bearing rock in a furnace, cooling the melt to fibre production temperature, discharging the melt from the furnace and forming fibres from it. Melting is carried out in a bottom-electrode arc furnace fitted with carbon electrodes. The intention of this method is to produce fibres which have improved quality but by means of a simpler process than was previously known to the authors and at decreased cost. This publication does not address the particular problems which arise with the spinning cup process, in which melt is fed into a rapidly rotating cup and forced through apertures in the cup to form fibres. Such a method is not discussed in this publication. Instead, the preferred fibre production method involves blowing steam through a melt stream to produce fibres. This method is often known as the Düsenblasverfahren. One centrifugation method is mentioned in which melt is centrifuged out of a cylindrical chamber but there is no disclosure of a spinning cup method in which the melt is centrifuged through apertures in the walls of the cup.

There is a need for a method to produce MMVF with both high quality, especially reduced shot, and a high temperature resistance. Further there is a need for a process of producing the fibres which have melt compositions fiberised to an extent of at least 95%. Further there is a need for a process of producing the fibres which is commercially viable and efficient and sustainable.

The prior art methods only provide improved temperature resistance of fibres to a certain extent, and the traditionally produced stone wool fibres have superior properties at high temperatures.

According to a first aspect of the invention there is provided a method of manufacture of man-made vitreous fibres (MMVF) comprising:
applying electrical potential to a melt using graphite electrodes;
fiberising the melt to form fibres by a spinning cup method; and
collecting the formed fibres,
wherein the melt fed to the spinning cup comprises iron oxide.

According to a second aspect of the invention there is provided MMVF produced by the method of the first aspect of the invention.

According to a third aspect of the invention there is provided a MMVF product comprising:
fibres containing at least 2% by weight Fe calculated as Fe₂O_{3;} at least 85% Fe(2+) based on the total Fe; undetectable levels of Fe(0); and
less than 2% by weight shot;
wherein the average fibre diameter is within the range of 2-5 µm.

Total Fe is total Fe(2+) and Fe(3+). In practice this is the same as total Fe(2+) and Fe(3+) and Fe(0), because Fe(0) is generally undetectable in the melts and fibres of the invention.

Preferably, the MMVF of the third aspect of the invention comprise 2-12wt% Fe calculated as Fe₂O₃, more preferably 5-9 wt% and most preferably 4-7.5 wt%. Preferably the MMVF comprise at least 90% Fe(2+) based on the total Fe, preferably at least 95%, most preferably at least 97%. Preferably the MMVF comprise less than 1% by weight shot.

In a further embodiment, there is provided a method of manufacture of MMVF comprising heating and melting a mineral charge in an electric furnace using graphite electrodes, to form a melt,
fiberising the melt to form fibres by a spinning cup method, and
collecting the formed fibres,
wherein the mineral charge comprises iron oxide. Preferably the graphite electrodes are in contact with the mineral charge. The graphite electrodes generally become at least partially submerged in the melt.

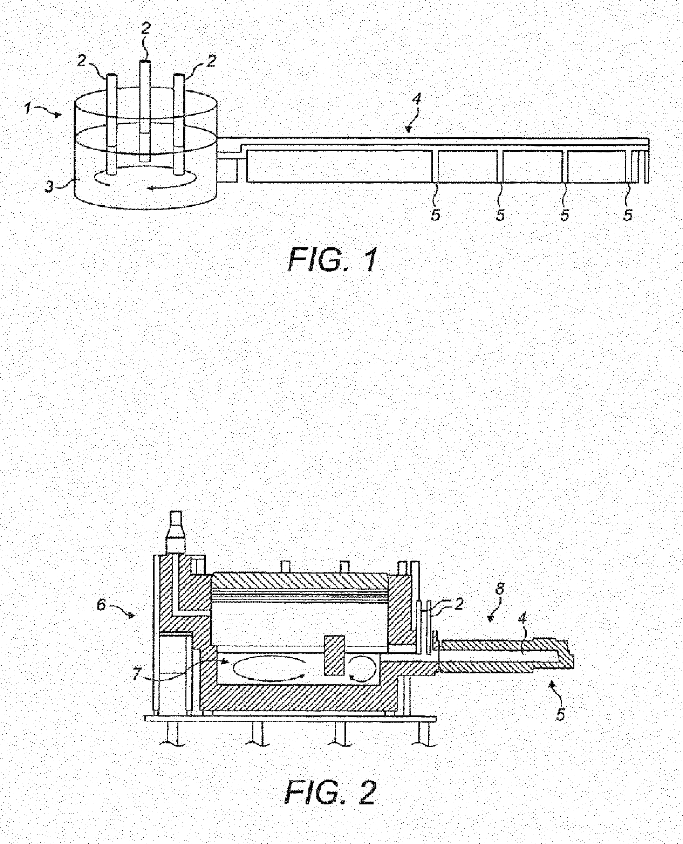

This particular embodiment is shown in Figure 1.

The aim of the invention is to produce fibres which have a higher resistance to fire and heat and which are of optimal insulation quality; that is they comprise a low level of shot.

In this invention, we specifically select the combination of use of graphite electrodes to apply an electrical potential to a melt with fiberisation of the melt by a spinning cup process. The spinning cup process is sometimes also known as "internal centrifugation". One advantage of using this combination of processes is that the resulting MMVF when formed into an insulation product using a binder have an excellent combination of properties. They have high resistance to temperatures of up to 1000°C. The MMVF are good quality, that is they comprise low levels of shot, preferably less than 5 wt% shot, preferably less than 2 wt% shot, most preferably less than 1 wt% shot. This is believed to be associated with the fact that the resulting fibres have a high content of iron in the form of Fe(2+), preferably in combination with MgO.

The redox conditions in the process of providing the melt, combined with the spinning method chosen, influence the distribution of the various possible iron oxides in the bulk melt and the final properties of the MMVF produced from the melt. Because the melting process chosen results in a melt having undetectable levels of metallic iron, it is then possible to fiberise using a spinning cup without the risk, which would otherwise arise, of blocking the apertures of the spinning cup and hence decreasing its useful lifetime.

We find that the melting process of the invention results in bulk melts that are significantly improved in terms of homogeneity and level of impurities such as drops of metallic iron having size of few microns, and highly suited for fiberisation via the spinning cup process, in comparison with conventional cupola melting methods, even if the bulk chemistry and concentration of Fe(2+)/Fe(total) are the same. This is despite the fact that the melting process of the invention generates minor amounts of metallic iron (so-called "pig iron") as accumulated sediment in the bottom of the furnace, but this sediment does not appear in the feeder channel or in the formed fibres.

The differences in homogeneity and impurities in the bulk melt are transferred to the fibres, where we find that fibres made from a melt produced from a conventional coke-fired cupola furnace have significantly different properties in relation to absorption of microwaves, compared to fibres made, as in the invention, from a melt produced in an electric furnace, in particular a submerged arc furnace, where the energy for melting is transferred to the melt by graphite electrodes.

Fibre slabs of MMVF stone wool (without binder) made by the same spinning method and having the same bulk chemical composition but with their origin in different melting processes - submerged arc furnace with graphite electrodes versus coke-fired cupola furnace - have been macroscopically tested for dielectric properties by absorption of energy transferred by microwaves. In particular the "dielectric loss factor" ε" has been determined for the fibres. We find that if the melt used for manufacturing the MMVF has been formed in a submerged arc furnace with graphite electrodes, the fibres formed from the melt have low ε". The loss factor ε" is <0.02, which means that the fibres do not absorb energy from microwaves. It can even be <0.01. This level of ε" is essentially the same as for glass wool in which there is no detectable metallic iron (as a result of the oxidising conditions in the melting process) even if there might be measurable Fe₂O₃ in the bulk chemical composition for the glass melt. If the melt for manufacturing the stone wool fibres has been produced in a conventional coke-fired cupola furnace we find that the fibres formed have a dielectric loss factor in the range 0.05 < ε" <0.07.

Despite the very low dielectric "loss factor" for stone wool fibres which are produced from melts made as defined by this invention, this melt still has a very high ratio of Fe(2+)/Fe(total). It is even higher than 80% which has been described for the cupola process in WO95/01941.

The raw materials used as the mineral charge can be selected from a variety of sources, as is known. These include basalt, diabase, nepheline syenite, glass cullet, bauxite, quartz sand, limestone, rasorite, sodium tetraborate, dolomite, soda, olivine sand, potash.

The melt may be made in a single step by supplying an electric furnace with the mineral charge and heating and melting the mineral charge to create a melt by applying electrical potential using graphite electrodes. This method preferably uses a submerged arc furnace. In a submerged arc furnace, the furnace is arranged such that the graphite electrodes are in contact with the mineral charge and are at least partially submerged in the melt. Various types of graphite electrodes are known and can be used in a submerged arc furnace. Preferably the graphite electrodes in the submerged arc furnace are preformed solid graphite electrodes.

The advantage of using graphite electrodes is that they increase the level of Fe(2+) present in the melt which results in MMVF which have a high resistance to temperatures of up to 1000°C.

Preferably the melt has a low liquidus temperature T_{liq}, preferably less than 1220°C, preferably in the range 1100-1180°C. The viscosity of the melt at the liquidus temperature is generally above 100 Pa s, preferably above 300 Pa s, and more preferably above 600 Pa s, especially if the T_{liq} is low.

The T_{liq} can be measured according to ASTM C829-81.

It is important to have a low T_{liq} in order to avoid formation of crystals in the melt during spinning (and consequent risk of blocking of the apertures in the spinning cup). The advantage of having a low liquidus temperature for the melt composition is thus that the fiberisation process can run at corresponding lower temperatures and therefore at lower costs - especially regarding energy for fiberising and wearing materials like hot gas burner equipment and the spinning cup.

The melt is fiberised by the spinning cup technology (also sometimes described as internal centrifugation). The melt has a temperature at the end of the feeder channel in the range 1260 C -1300 °C before it is led to the spinning cup. The melt preferably cools down when it is transferred from the feeder channel to the internal part of the spinning cup in such a way that the temperature for the melt when flowing through the perforations of the spinning cup is in the range 1150 - 1220 °C.

The viscosity of the melt in the spinning cup is in the range of 50 to 400 Pa s, preferably 100 to 320 Pa s, more preferably 150 - 270 Pa s. If the viscosity is too low, fibres of the desired thickness are not formed. If the viscosity is too high, the melt does not flow through the apertures in the spinning cup at the right pull rate, which can lead to blocking of the apertures in the spinning cup.

The melt is preferably fiberised by the spinning cup method at a temperature between 1160 and 1210 °C. The viscosity of the melt is preferably in the range 100-320 Pa s at the spinning temperature.

Alternatively to melting directly in an electric furnace having graphite electrodes, the melt may be made in a different furnace, such as a tank or wanne furnace, or a combined electric and gas furnace which has an oxidising environment. Molybdenum electrodes are preferably used in the furnace. The charge is made into a bulk liquid. Bulk liquid means that the composition is able to flow like a liquid, but there may be unmelted parts of the charge present in the bulk liquid. All of the charge may be melted in the bulk liquid.

In this alternative embodiment, the bulk liquid or bulk melt will usually need refining to obtain the desired homogeneity and redox potential before it is transferred to the spinning cup.

The refining and adjustment of the redox state and therefore the ratio between Fe(2+)/Fe(total) may happen in a refiner part of the feeder channel comprising graphite electrodes (as shown in Figure 2 discussed below). Alternatively the refining occurs in a separate refiner unit comprising graphite electrodes for final processing to obtain the correct temperature, the required homogeneity and redox state of the melt. Applying electrical potential to the bulk liquid by use of the graphite electrodes produces a reducing environment which reduces the Fe₂O₃ to FeO and generates a ratio Fe(2+)/Fe(total) > 85%, preferably Fe(2+)/Fe(total) > 90%, preferably Fe(2+)/Fe(total) > 97%. Preferably in the refining step (whether in the feeder channel or in a separate refiner unit) the graphite electrodes are at least partially submerged in the bulk liquid.

The resulting melt is then fiberised by the spinning cup method.

The amount of iron oxide present in the melt prior to the fiberisation step and in the MMVF, calculated (in conventional manner) as Fe₂O₃, is preferably 2 to 12 wt %, more preferably 5 to 9 wt %, most preferably 4-7.5 wt%. The level of iron in the melt and MMVF is expressed, as is conventional for MMVF, as if it were present as Fe₂O₃, although in practice in the melt and in the fibres the iron is overwhelmingly present in the form of Fe(2+). The advantage of converting almost all iron to Fe(2+) is that it improves the fire resistance of the resulting MMVF.

The amount of Fe(2+) and Fe(3+) can be determined using the Mössbauer method described in "The ferric/ferrous ratio in basalt melts at different oxygen pressures", Helgason et al, Hyperfine Interact., 45 (1989) pp 287-294. Metallic iron Fe(0) can be determined using methods described in this reference. In the invention the level of metallic iron in the fibres and in the melt fed to the spinning cup is preferably at a level so low as to be undetectable using this method.

The proportion of Fe(2+) based on total Fe, in the melt prior to the fiberisation step and in the MMVF, is preferably greater than 80%, preferably greater than 90%, preferably greater than 95%, most preferably greater than 97%. The advantage of having a high Fe(2+)/Fe(total) ratio is that the fire resistance of the resulting MMVF is increased by this increasing ratio. Additionally, and surprisingly, an advantage of the method is that the amount of Fe(0) as impurities in the melt fed to the spinning cup is at such low level, that it is undetectable by the Mössbauer method.

The advantage of this is that in the internal centrifugation process, also known as a spinning cup process, Fe(0) can block the holes of the spinner and therefore reduce its working lifetime. In commercial practice, this will increase production and maintenance costs and reduce profitability. Reducing the amount of Fe(0) that is present in the melt is therefore highly advantageous for the method of manufacture of the invention. Low levels of Fe(0) also have an advantage that the possibility remains open of curing the binder using microwave energy (which would not be possible for products containing significant levels of metallic iron).

Preferably, the proportion of Fe(0) based on total Fe in the melt in the feeder channel prior to the fiberisation step and in the MMVF is so low that examination of the dielectric properties for the fibres result in a loss factor ε" < 0.02, preferably ε" < 0.01.

The proportion of Fe(3+), based on total Fe in the melt, prior to the fiberisation step, and in the MMVF is generally less than 5%, preferably less than 3%. The advantage of reducing the amount of iron present as Fe(3+) is that the fibres have increased fire resistance.

The amount of total iron in the overall melt or fibre composition, based on total oxides in the melt or fibres, is calculated as Fe₂O₃. This is a standard means of quoting the amount of iron present in such an MMVF, a charge or a melt. The actual weight percentage of FeO and Fe₂O₃ present will vary based on the iron oxide ratio and/or redox state of the melt. As an example,

| **Fe(3+)** | **Fe(2+)/Fe(3+) = 80/20** | | **Fe(2+)/Fe(3+) = 97/3** | |
|---|---|---|---|---|
| **Fe₂O₃** | **FeO** | **Fe₂O₃** | **FeO** | **Fe₂O₃** |
| w/w% | w/w% | w/w% | w/w% | w/w% |
| Fe₂O₃ | FeO | Fe₂O₃ | FeO | Fe₂O₃ |
| 3 | 2.2 | 0.6 | 2.6 | 0.09 |
| 4 | 2.9 | 0.8 | 3.5 | 0.12 |
| 5 | 3.6 | 1.0 | 4.4 | 0.15 |
| 6 | 4.3 | 1.6 | 5.2 | 0.18 |
| 7 | 5.0 | 1.4 | 6.1 | 0.21 |
| 8 | 5.8 | 1.6 | 7.0 | 0.24 |

The skilled person will therefore understand that the actual weight percentage of the iron oxides present will be dependent on the ratio of Fe(2+) to Fe(3+).

The charge, the melt and the MMVF each preferably comprise silica in the range up to 50 wt%, more preferably up to 48 wt%, and alumina above 10 wt%, more preferably in the range 15 to 28 wt%, as well as iron oxides in the range at least 3 wt%. The melts and fibres are characterised as stone melts and stone wool fibres - the sum (CaO+MgO+Fe₂O₃) is > 15wt%.

The higher the level of MgO, the better fire properties for the fibres, but a disadvantage might be increased T_{liq} if the MgO level is too high. However, T_{liq} does not increase to a level that is too high as long as MgO < 6.5 wt%. Preferred ranges of MgO taking into account desirable melt and spinning properties and fire resistance properties of the final fibres are: 1.5 wt% <MgO < 6.5 wt%, preferably 3.5 wt% < MgO < 6.5 wt%, most preferably 4.5 wt% < MgO < 6.5 wt%. The combination of the preferred amounts of Fe(2+) in the fibres with MgO, and particularly with the preferred amounts of MgO results in fibres that have even greater fire resistance than fibres without MgO.

When MgO is between 1.5 to 3 wt%, the alumina content can be as high as 28 wt%. The higher the magnesium content the lower the alumina content, i.e. when MgO is higher than 3 wt%, the alumina content is preferably not higher than 25 wt%, more preferably the alumina content is not higher than 23 wt%.

The amount of silica is normally at least 35 wt%, preferably at least 38 wt%. It is normally below 50 wt% and preferably below 48 wt%. Silica as well as alumina is an important network former for the melt and especially silica secures the right viscosity of the melt for fiberisation.

Increased amount of alumina tends to increase T_{liq}. As a low T_{liq} is preferred, the amount of alumina should not exceed 28 wt%, and preferably not exceed 25 wt%. The amount of alumina influence the biosolubility of the fibres such that the higher the amount of the alumina the higher the biosolubility at pH 4.5.

The amount of calcium is normally 5 to 30 wt%, preferably 7 to 19 wt%.

The combined amount of alkali (Na₂O and K₂O) is preferably up to 30 wt%, preferably 10.5 to 16 wt%. The amount of alkali has an impact on T_{liq} and will lower the T_{liq}. Alkali influences the viscosity though Na₂O and K₂O do not have the same influence on the viscosity at 1400°C, as K₂O tends to have a higher tendency to increase the viscosity compared to Na₂O.

The charge, the melt and the MMVF preferably have contents of the following oxides as wt%:

| | |
|---|---|
| SiO₂ | 35-50, preferably 38-48 |
| Al₂O₃ | 12-30, preferably 15-28 |
| TiO₂ | up to 2 |
| Fe₂O₃ | 2-12 |
| CaO | 5-30, preferably 5-18 |
| MgO | up to 15, preferably 1-8 |
| Na₂O | up to 15 |
| K₂O | up to 15 |
| P₂O₅ | up to 3 |
| MnO | up to 3 |
| B₂O₃ | up to 3 |

These values are all quoted as oxides, as is conventional, but, as is known in the art, they are not necessarily present in this form in the charge, melt or MMVF.

An advantage of using these specific amounts in the melt is that the fibres have a good biosolubility at pH 4.5. This biosolubility can be determined by known means, for instance *in vitro* in terms of a dissolution rate at acid pH (about pH 4.5) of at least 25 nm/day. Alternatively the biosolubility may be determined *in vivo* in known manner.

Preferably there is less than 4% shot present in the fibres. Most preferably there is less than 2%, most preferably less than 1% shot present in the resulting fibres. Shot is solid charge with a particle diameter of greater than 63 µm. The reduction in the amount of shot present in the resulting fibres means that a greater percentage of the melt has been fiberised. Additionally the resulting product has less shot present which therefore results in a high quality product.

The resulting MMVF have dielectric properties resulting in a loss factor ε" < 0.02, preferably less than 0.01. ε" is the loss factor and is measured using microwaves of the given frequency, in this case 2450Hz. This low value of loss factor signifies the absence of detectable levels of metallic iron, and is comparable with the loss factor for glass fibres which do not contain iron.

The spinning cup process is sometimes referred to as internal centrifugation. In the spinning cup process, a melt is fiberised using hot air to draw the fibres through holes in the spinning cup. It is surprising therefore that the proportion of Fe(2+) based on total Fe in the MMVF remains greater than 80%, preferably greater than 90%, preferably greater than 95%, most preferably greater than 97%, even after this hot air drawing process.

The fibres resulting from the spinning cup process are preferably collected on a conveyor belt. Binder can be applied to the MMVF either during the fiberisation process, or post fiberisation. The binder may be applied by spraying the MMVF. Conventional types of binder for use with stone wool fibres may be used. The binder is then cured to produce a final product. The MMVF with binder is generally cured in a curing oven, usually by means of a hot air stream. The hot air stream may be introduced into the MMVF with binder from below, or above or from alternating directions in distinctive zones in the length direction of the curing oven. After curing, the cured binder composition binds the fibres to form a structurally coherent matrix of fibres. The product may be consolidated, for instance by compression, in known manner.

Preferably the final product is a coherent product which has a density of 10 kg/m³ to 250 kg/m³, preferably 15 kg/m³ to 180 kg/m³, most preferably 20 kg/m³ to 120 kg/m³.

For the density range of 10 to 250 kg/m³ the correspondent thermal conductivity will be as low as 30mW/mK.

Fire resistant products need to meet industry standards to be compliant with their end use. Products of the present invention can meet these requirements.

The MMVF produced by the method of the present invention, and the MMVF of the invention, have excellent fire resistance at 1000 °C. The MMVF can be made into a product for use in any of the conventional applications for MMVF, such as sound or heat insulation or fire protection. The product may be used in high temperature environments, such as at least 400°C up to 1000°C.

Any preferred features disclosed in this application are disclosed in combination with any other preferred feature.

### Brief Description of the Drawings

Figure 1 shows a preferred apparatus of the present invention.
Figure 2 shows an alternative apparatus of the present invention.
Figures 3A to 3D show untreated wool samples.
Figures 4A to 4D show wool samples heat treated at 700°C, heated with a fast heating rate.
Figures 5A to 5D show wool samples heat treated at 800°C, heated with a fast heating rate.
Figures 6A to 6D show wool samples heat treated at 900°C, heated with a fast heating rate.
Figures 7A to 7D show wool samples heat treated at 1000°C, heated with a fast heating rate.
Figures 8B and 8D show wool samples heat treated from room temperature to 800°C at a heating rate of 5°C.
Figures 9B and 9D show wool samples heat treated from room temperature to 1000°C at a heating rate of 5°C.

### Detailed description of the drawings

Figure 1 shows a preferred apparatus of the present invention for melting the charge prior to feeding the melt into a spinning cup. A charge is supplied to a submerged arc furnace (1). The charge is melted by applying electrical potential by means of the graphite electrodes (2). The graphite electrodes (2) are in contact with the charge and become partially submerged in the melt. Convection of melt occurs around the graphite electrodes (2) in the melt pool (3). The melt is fed into a feeder channel (4). The melt is then fed via the melt outlet (5) into a spinning cup (not shown) and the melt is fiberised.

Figure 2 shows an alternative apparatus of the invention for melting the charge prior to feeding the melt into a spinning cup. A charge is supplied to a gas, oil or electric heater furnace (6). The charge is melted under oxidising redox conditions by the gas, oil or electric furnace. Convection of melt occurs within bulk melt bath (7). The melt is fed into a graphite electrode-containing refiner (8) having graphite electrodes (2) which applies an electrical potential to the melt. The graphite electrodes are at least partially submerged in the melt. The melt is fed into a feeder channel (4). The melt is then fed via the melt outlet (5) into a spinning cup (not shown) and the melt is fiberised.

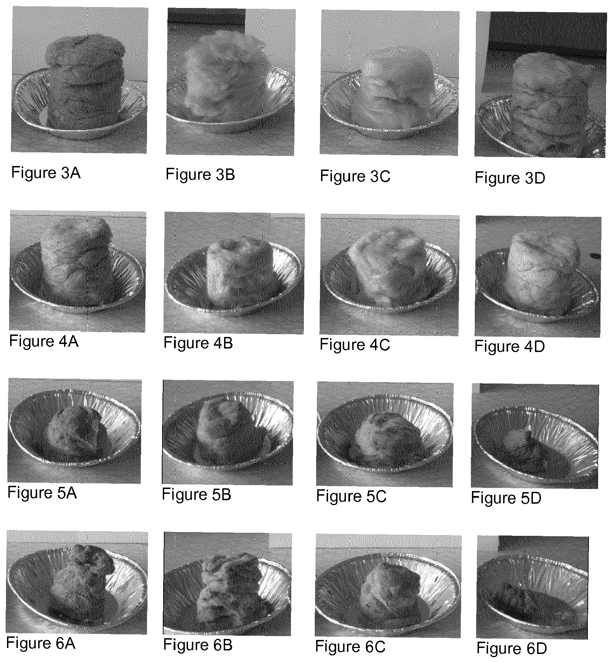

Figures 3A to 9D are discussed in the Examples section below.

### Examples

The following examples illustrate the present invention, but do not limit the scope of the invention.

The fire properties of three MMVF samples (A to C) produced according to the invention were compared with a commercially available product D, produced by melting a charge in a gas/electric fired furnace with molybdenum electrodes followed by fiberisation by internal centrifugation.

The wool samples were heat treated in two different ways, i.e. either a fast heating of the wool or a slow heating of the wool.

### Experimental:

Table 1 lists the compositions of the fibres used for the "High temperature stability test" study.

**Table 1**

| | | **A** | **B** | **C** | **D** |
|---|---|---|---|---|---|
| | | Invention | Invention | Invention | Commercial product |
| SiO₂ | wt% | 39.9 | 39.2 | 38.8 | 40.7 |
| Al₂O₃ | wt% | 24.7 | 25.7 | 26.6 | 23.3 |
| TiO₂ | wt% | 1.2 | 1.2 | 1.2 | 0.7 |
| Fe₂O₃ | wt% | 6.7 | 5.3 | 5.5 | 6 |
| CaO | wt% | 13.1 | 13.9 | 13.8 | 14.6 |
| MgO | wt% | 2 | 2.1 | 2.2 | 1.8 |
| Na₂O | wt% | 5.6 | 5.6 | 5.3 | 5.6 |
| K₂O | wt% | 5.1 | 5.2 | 5.3 | 5.6 |
| P₂O₅ | wt% | 0.2 | <0,1 | 0.1 | 0.9 |
| MnO | wt% | <0,1 | <0,1 | <0,1 | 0.2 |
| Fe³⁺ / Fe tot | % | < 3 | < 3 | < 3 | 65 |
| Fibre diameter d50 | µ | 5.0 | 5.1 | 5.1 | 4.0 |

Wool samples for heat treatment were prepared according to the method described in Materials Science Forum vol. 558-559 (2008) pp. 1255-1260. Prior to heat treatment of the wool samples they look as shown in Figures 3A to 3D. Figure 3A shows the product made from fibre composition A. Figure 3B shows the product made from fibre composition B. Figure 3C shows the product made from fibre composition C. Figure 3D shows the product made from fibre composition D. The fibres D were taken from a commercial product, thus this product had to be heat treated to remove the binder prior to the thermal stability study. The binder was removed by the following heat treatment: 590°C for 20 min.

The wool samples were heat treated as described in Table 2.

**Table 2**

| Heating rate | Fast*¤ | | | | 5°C/min** | |
|---|---|---|---|---|---|---|
| Temperature (°C) | 700 | 800 | 900 | 1000 | 800 | 1000 |
| Time (min) | 30 | 30 | 30 | 30 | n/a | n/a |
| A: | Fig. 4A | Fig. 5A | Fig. 6A | Fig. 7A | No test | No test |
| B: | Fig. 4B | Fig. 5B | Fig. 6B | Fig. 7B | Fig. 8B | Fig. 9B |
| C: | Fig. 4C | Fig. 5C | Fig. 6C | Fig. 7C | No test | No test |
| D: | Fig. 4D | Fig. 5D | Fig. 6D | Fig. 7D | Fig. 8D | Fig. 9D |

Table 2 shows which heat treatments were carried out on each sample. The Figure referenced in the table shows the results after the heat treatment was performed on each fibre composition. There are no figures 8A, 8C, 9A or 9C as these tests were not carried out.

* A fast heating rate is to place the sample in the furnace at a specific temperature and keep the sample at the temperature for 30 min.

** The heat treatment mimics the standard: NORDTEST (NT fire xx - Nordtest Remiss No. 1114-93) i.e. to heat from room temperature to a specific temperature with a heating rate of 5°C/min and when the target temperature is reached the sample is removed from the furnace.

### Results:

Figures 4A to 7D show the result of the fast heat treatment. It is seen that all compositions A to C are superior to fibre D in respect to keeping their shape at 800, 900 and 1000°C.

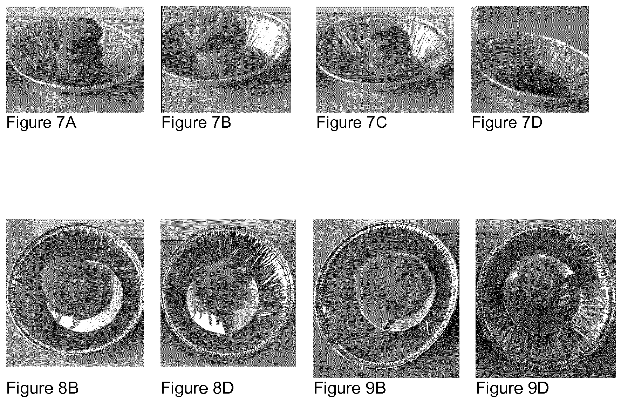

Figures 8B, 8D, 9B and 9D show the result of slow heating. It is seen that fibre B shows its superiority over fibre D by keeping its shape.

The invention will be further described in the following non-limiting numbered embodiments.
Embodiment 1. A method of manufacture of man made vitreous fibres (MMVF) comprising:
   applying electrical potential to a melt using graphite electrodes;
   fiberising the melt by means of a spinning cup to form fibres; and
   collecting the formed fibres,
   wherein the melt fed to the spinning cup comprises iron oxide.
Embodiment 2. The method according to embodiment 1, wherein the graphite electrodes are at least partially submerged in the melt.
Embodiment 3. The method according to embodiment 1 or 2, wherein the melt comprises 2-12 wt % Fe calculated as Fe₂O₃, preferably 5-9 wt %, most preferably 4-7.5 wt%.
Embodiment 4. The method according to any preceding embodiment, wherein the proportion of Fe(2+) based on total Fe in the melt prior to the fiberisation step is greater than 80%, preferably greater than 90%, preferably greater than 95%, most preferably greater than 97%.
Embodiment 5. The method according to any preceding embodiment wherein the melt prior to the fiberisation step does not contain Fe(0) at detectable levels.
Embodiment 6. The method according to any preceding embodiment wherein the proportion of Fe(3+) based on total Fe is less than 5%, preferably less than 3%, most preferably less than 1%.
Embodiment 7. The method according to any preceding embodiment wherein the melt comprises silica in an amount up to 47 wt%, alumina in an amount in the range 15 to 25 wt%, iron oxides (calculated as Fe₂O₃) in an amount at least 3 wt% and (CaO+MgO+Fe₂O₃) in a total amount above 15 wt%.
Embodiment 8. The method according to any preceding embodiment wherein the melt comprises the following, quoted as weight percent oxides:
   - SiO₂: 35 - 50, preferably 38-48
   - Al₂O₃: 12-30, preferably 15-28
   - TiO₂: up to 2
   - Fe₂O₃: 2-12
   - CaO: 5-30, preferably 5-18
   - MgO: up to 15, preferably 1-8
   - Na₂O: up to 15
   - K₂O: up to 15
   - P₂O₅: up to 3
   - MnO: up to 3
   - B₂O₃: up to 3
Embodiment 9. The method according to any preceding embodiment, wherein the melt comprises MgO in an amount in the range 1.5-6.5 wt%, preferably 3.5-6.5 wt%, more preferably 4.5-6.5 wt%.
Embodiment 10. The method according to any preceding embodiment, wherein a charge is heated and melted by the graphite electrodes in a submerged arc furnace to form the melt.
Embodiment 11. The method according to any of embodiments 1-9 wherein the melt is made by heating a charge in a preheating furnace to produce a bulk liquid, feeding the bulk liquid into a submerged arc furnace, and subjecting the melt to electrical potential in the submerged arc furnace.
Embodiment 12. The method according to embodiment 11 wherein the preheating furnace is a tank furnace operating under oxidising conditions.
Embodiment 13. A method of manufacture of man-made vitreous fibres (MMVF) comprising heating and melting a charge in an electric furnace using graphite electrodes to form a melt,
   fiberising the melt by means of a spinning cup to form fibres, and collecting the formed fibres,
   wherein the charge comprises iron oxide.
Embodiment 14. The method according to embodiment 13 wherein the graphite electrodes are in contact with the charge and become at least partially submerged in the melt.
Embodiment 15. A MMVF product produced by the method of any preceding embodiment.
Embodiment 16. The MMVF according to embodiment 15, wherein the proportion of Fe(2+) based on total Fe is greater than 80%, preferably greater than 90%, preferably greater than 95%, most preferably greater than 97%.
Embodiment 17. The MMVF according to embodiment 15 or 16 wherein ε" is less than 0.02, preferably less than 0.01.
Embodiment 18. A man-made vitreous fibre product comprising:
   at least 2% by weight iron oxide calculated as Fe₂O_{3;}
   at least 85% Fe(2+) based on the total Fe;
   no detectable Fe(0); and
   less than 2% by weight shot;
   wherein the average fibre diameter is in the range 2-5 µm.
Embodiment 19. A man-made vitreous melt comprising the following, quoted as weight percent oxides:
   - SiO₂: 35 - 50, preferably 38-48
   - Al₂O₃: 12-30, preferably 15-28
   - TiO₂: up to 2
   - Fe₂O₃: 2-12
   - CaO: 5-30, preferably 5-18
   - MgO: up to 15, preferably 1-8
   - Na₂O: up to 15
   - K₂O: up to 15
   - P₂O₅: up to 3
   - MnO: up to 3
   - B₂O₃: up to 3

   and comprising:
      at least 85% Fe(2+) based on the total Fe;
      no detectable Fe(0);
      wherein the T_{liq} is less than 1220°C, preferably 1100-1180°C.
Embodiment 20. A man-made vitreous fibre (MMVF) product formed from the melt of embodiment 19.
Embodiment 21. An insulating product comprising the MMVF of any of embodiments 15 to 18 or 20 and a binder.

## Claims

1. A man-made vitreous melt comprising the following, quoted as weight percent oxides:
SiO₂ 35 - 50, preferably 38-48
Al₂O₃ 12-30, preferably 15-28
TiO₂ up to 2
Fe₂O₃ 2-12
CaO 5-30, preferably 5-18
MgO up to 15, preferably 1-8
Na₂O up to 15
K₂O up to 15
P₂O₅ up to 3
MnO up to 3
B₂O₃ up to 3
and comprising:
at least 85% Fe(2+) based on the total Fe;
no detectable Fe(0);
wherein the T_{liq} is less than 1220°C, preferably 1100-1180°C.

2. A man-made vitreous fibre (MMVF) product formed from the melt of claim 1.

3. A method of manufacture of man made vitreous fibres (MMVF) comprising:
applying electrical potential to a melt using graphite electrodes;
fiberising the melt by means of a spinning cup to form fibres; and
collecting the formed fibres,
wherein the melt fed to the spinning cup comprises iron oxide.

4. The method according to claim 3, wherein the graphite electrodes are at least partially submerged in the melt.

5. The method according to claim 3 or 4, wherein the melt comprises 2-12 wt % Fe calculated as Fe₂O₃, preferably 5-9 wt %, most preferably 4-7.5 wt%.

6. The method according to any of claims 3 to 5, wherein
(i) the proportion of Fe(2+) based on total Fe in the melt prior to the fiberisation step is greater than 80%, preferably greater than 90%, preferably greater than 95%, most preferably greater than 97%;
(ii) the melt prior to the fiberisation step does not contain Fe(0) at detectable levels;
(iii) the proportion of Fe(3+) based on total Fe is less than 5%, preferably less than 3%, most preferably less than 1%; and/or
(iv) the melt comprises silica in an amount up to 47 wt%, alumina in an amount in the range 15 to 25 wt%, iron oxides (calculated as Fe₂O₃) in an amount at least 3 wt% and (CaO+MgO+Fe₂O₃) in a total amount above 15 wt%.

7. The method according to any of claims 3 to 6, wherein the melt comprises the following, quoted as weight percent oxides:
SiO₂ 35 - 50, preferably 38-48
Al₂O₃ 12-30, preferably 15-28
TiO₂ up to 2
Fe₂O₃ 2-12
CaO 5-30, preferably 5-18
MgO up to 15, preferably 1-8, more 1.5-6.5 wt%, even more preferably 3.5-6.5 wt%, most preferably 4.5-6.5 wt%
Na₂O up to 15
K₂O up to 15
P₂O₅ up to 3
MnO up to 3
B₂O₃ up to 3

8. The method according to any of claims 3 to 7, wherein
(a) a charge is heated and melted by the graphite electrodes in a submerged arc furnace to form the melt, or
(b) the melt is made by heating a charge in a preheating furnace to produce a bulk liquid, feeding the bulk liquid into a submerged arc furnace, and subjecting the melt to electrical potential in the submerged arc furnace, optionally wherein the preheating furnace is a tank furnace operating under oxidising conditions.

9. A method of manufacture of man-made vitreous fibres (MMVF) comprising heating and melting a charge in an electric furnace using graphite electrodes to form a melt,
fiberising the melt by means of a spinning cup to form fibres, and
collecting the formed fibres,
wherein the charge comprises iron oxide.

10. The method according to claim 9 wherein the graphite electrodes are in contact with the charge and become at least partially submerged in the melt.

11. A MMVF product produced by the method of any of claims 3 to 10.

12. The MMVF according to claim 11, wherein the proportion of Fe(2+) based on total Fe is greater than 80%, preferably greater than 90%, preferably greater than 95%, most preferably greater than 97%.

13. The MMVF according to claim 11 or 12 wherein ε" is less than 0.02, preferably less than 0.01.

14. A man-made vitreous fibre product comprising:
at least 2% by weight iron oxide calculated as Fe₂O_{3;}
at least 85% Fe(2+) based on the total Fe;
no detectable Fe(0); and
less than 2% by weight shot;
wherein the average fibre diameter is in the range 2-5 µm.

15. An insulating product comprising the MMVF of any of claims 2, and 11 to 20 and a binder.
